(19) Europäisches Patentamt / European Patent Office / Office européen des brevets

(11) **EP 4 410 083 A1**

(12) **EUROPEAN PATENT APPLICATION**
published in accordance with Art. 153(4) EPC

(43) Date of publication:
**07.08.2024 Bulletin 2024/32**

(21) Application number: **23880890.1**

(22) Date of filing: **09.06.2023**

(51) International Patent Classification (IPC):
**A01D 34/00** (2006.01)

(86) International application number:
**PCT/CN2023/099372**

(87) International publication number:
**WO 2024/093238 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2022 CN 202211359771**

(71) Applicant: **Wuxi Junchuangfei Satellite Technology Co., Ltd**
**Wuxi, Jiangsu 214062 (CN)**

(72) Inventor: **XIONG, Jian**
**Wuxi, Jiangsu 214062 (CN)**

(74) Representative: **Cleanthous, Marinos**
**IOANNIDES CLEANTHOUS AND CO LLC**
**4 Prometheus Street, 3 Floor**
**1065 Nicosia (CY)**

(54) **METHOD FOR CONTROLLING LAWN MOWER COMPRISING LASER RADAR, AND APPARATUS**

(57) The present disclosure relates to a control method for a mower with a LiDAR, and a device. The control method includes: controlling the LiDAR to change from a first position to a second position; planning a first path and a second path; performing a mowing operation according to the first path; returning to a charging position according to the second path; and controlling the LiDAR to change from the second position to the first position. The method of the present disclosure can not only achieve change of a cutterhead from the first position to the second position, but also achieve the change of the LiDAR from the first position to the second position. Due to the change in the position of the LiDAR, the LiDAR can be hidden into a mower from the outside of a mower shell, or can extend from the inside of the mower to the outside of the mower, so that the mower can achieve efficient operations while the overall height of the mower is reduced, thus avoiding the influence, caused by the long-term exposure of the LiDAR to an outdoor environment, on the service life, and also avoiding damage during packaging and transportation; and the maintenance cost of the mower is reduced.

| Send a set mowing height | S1 |
| Transmit the set height to a second controller | S2 |
| The second controller controls a first adjustment unit | S3 |
| The second controller controls a second adjustment unit for the first time | S4 |
| Plan a first path and a second path | S5 |
| Work according to the first path | S6 |
| Return for charging according to the second path | S7 |
| The second controller controls the second adjustment mechanism for the second time | S8 |

**FIG. 1**

## Description

## TECHNICAL FIELD

The present disclosure relates to the technical field of horticultural machinery equipment, and in particular, to a control method for a mower with a LiDAR, and a device.

## BACKGROUND

A mower is a mechanical tool used for trimming lawns, vegetations, and the like. It is widely used and is mainly composed of a cutterhead, a blade, an engine, a walking mechanism, a LiDAR, and a control portion.

At present, the LiDAR is applied to the mower, which can effectively solve the problems of avoidance of an environmental obstacle and modeling navigation. However, the LiDAR is mounted outside a mower shell, which may affect the service life of the LiDAR due to long-term exposure to the sunlight and rain. In addition, the LiDAR is exposed outside the mower shell, so that the mower has a too large size. Therefore, the mower cannot achieve efficient operations with a small volume. This makes the mower vulnerable to damage during packaging and transportation, which increases the maintenance cost of the mower.

## SUMMARY

For the shortcomings in the prior art, the present disclosure aims to provide a control method for a mower with a LiDAR, and a device, so as to solve one or more problems in the existing technology.

In order to achieve the above objectives, the present disclosure adopts the following technical solutions:

A control method for a mower with a LiDAR includes the following steps:

> controlling the LiDAR to change from a first position to a second position;
> planning a first path and a second path;
> performing a mowing operation according to the first path; and
> returning to a charging position according to the second path; and
> controlling the LiDAR to change from the second position to the first position.

Further, the mower control method further includes the following steps:

> sending a set mowing height; and
> controlling a cutterhead to change from a first height to a second height;
> the step of controlling a cutterhead from a first height to a second height includes the following steps:

obtaining the set mowing height;
calculating the number of rotations of a driving end of a first adjustment unit; and
calculating time of rotation of the driving end of the first adjustment unit.

Further, a calculation formula for the number of rotations of the driving end of the first adjustment unit is as follows:

$$C_i = k_i \times h$$

wherein $C_i$ is the number of rotations of the driving end in the first adjustment unit; $k_i$ is a constant; and h is the set mowing height.

Further, a calculation formula for the time of rotation of the driving end is as follows:

$$t_i = (C_i \times R)/S \times 60s$$

wherein the number of rotations of the driving end in the first adjustment unit is $C_i$; R is a reduction ratio of the driving end; and S represents a speed of rotation of the driving end.

the controlling the LiDAR to change from a first position to a second position includes the following steps:

> determining a position of the LiDAR;
> enabling a cover plate to move towards a direction away from the LiDAR; and
> raising the LiDAR from the first position to the second position.

Further, after the LiDAR is raised from the first position to the second position, whether the LiDAR is raised to the second position needs to be detected; if yes, the raising is stopped; and if no, continuing to raise the LiDAR until the LiDAR reaches the second position.

Further,

the controlling the LiDAR to change from the second position to the first position includes the following steps:

> determining a position of the LiDAR;
> lowering the LiDAR from the second position to the first position; and
> enabling a cover plate to move towards a direction close to the LiDAR, and stopping the cover plate until the cover plate covers the LiDAR.

Further, after the LiDAR is lowered from the second position to the first position, whether the LiDAR is lowered to the second position needs to be detected; if yes, the lowering is stopped; and if no, the LiDAR is continued to be lowered until the LiDAR reaches the first position.

Further, when the LiDAR changes from the first position to the second position or from the second position to the first position, anti-pinch detection is also triggered; and the anti-pinch detection includes the following steps:

acquiring a real-time current;

comparing the real-time current with a set current change range to determine whether a mower is in a first action state or a second action state;

if the mower is in the first action state, comparing the real-time current with a threshold; if the current is less than the threshold, indicating that there is no obstacle; and if the real-time current is greater than the threshold, indicating that there is an obstacle;

if the mower is in the second action state, comparing the real-time current with the threshold; and if the current is less than the threshold, indicating that there is no obstacle; and if the real-time current is greater than the threshold, indicating that there is an obstacle.

Correspondingly, the present invention further provides a control device. The control device includes a first controller and a second controller connected to the first controller; and an output end of the second controller is connected to a first adjustment unit and a second adjustment unit.

Compared with the prior art, the present disclosure has the following beneficial and technical effects:

(I) The method of the present disclosure can not only achieve change of a cutterhead from the first position to the second position, but also achieve the change of the LiDAR from the first position to the second position. Due to the change in the position of the LiDAR, the LiDAR can be hidden into a mower from the outside of a mower shell, or can extend from the inside of the mower to the outside of the mower, so that the mower can achieve efficient operations while the overall height of the mower is reduced, thus avoiding the influence, caused by the long-term exposure of the LiDAR to an outdoor environment, on the service life, and also avoiding damage during packaging and transportation; and the maintenance cost of the mower is reduced.

(II) Further, by acquiring current changes during the rising and falling of the LiDAR and the movement of the cover plate, the action state of the mower can be determined. Then, the current is compared with the threshold to determine whether there is an obstacle during the rising and falling of the LiDAR, so as to avoid damage to the LiDAR caused by the obstacle during the rising and falling. This effectively prolongs the service life of the LiDAR, achieves an anti-pinch effect, and improves the safety of use of the mower.

## BRIEF DESCRIPTION OF THE DRAWINGS

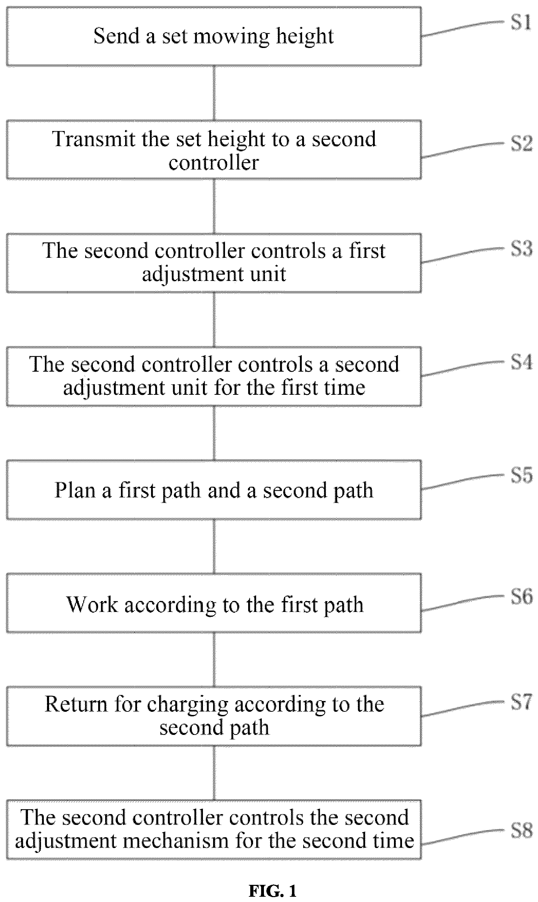

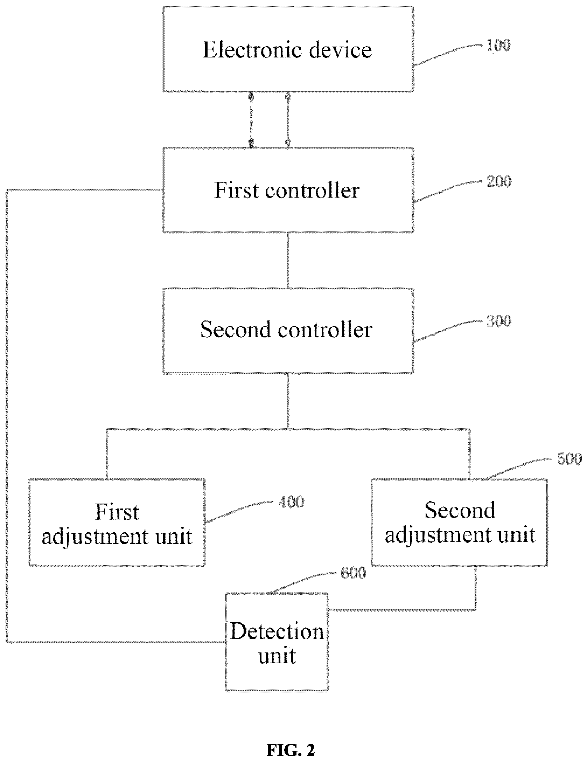

FIG. 1 is a flowchart of a control method in a control method for a mower with a LiDAR, and a device according to an embodiment of the present invention. FIG. 2 is a schematic structural diagram of a device in a control method for a mower with a LiDAR, and a device according to an embodiment of the present invention.

100: electronic device; 200: first controller; 300: second controller; 400: first adjustment unit; 500: second adjustment unit; and 600: detection unit.

## DETAILED DESCRIPTION OF THE EMBODIMENTS

In order to make the objectives, technical solutions, and advantages of the present disclosure clearer, a further detailed explanation will be made to a control method for a mower with a LiDAR, and a device provided by the present invention below in combination with the accompanying drawings and specific implementations. According to the following explanation, the advantages and features of the present disclosure will be clearer. It should be noted that the accompanying drawings are in a very simplified form and all use imprecise proportions, only to facilitate and explicitly assist the explanation of the implementations of the present disclosure. In order to make the objectives, features, and advantages of the present disclosure more comprehensible, refer to the accompanying drawings. It should be noted that the structure, proportion, size, and the like depicted in the drawings of this specification are only intended to cooperate with the content disclosed in this specification for those familiar with the technology to understand and read, and are not intended to limit the conditions for the implementation of the present disclosure. Therefore, they do not have any technical substantive significance. Without affecting the effects that can be achieved by the present disclosure and purposes that can be achieved, any modification of structures, change of proportion relationships, or adjustment of sizes shall all fall within the scope covered by the technical content disclosed in the present disclosure.

Referring to FIG. 2, a control device for a mower with a LiDAR includes a first controller 200 and a second controller 300 connected to the first controller 200. An output end of the first controller 200 is connected to an input end of the second controller 300.

Specifically, the first controller 200 is preferably a network mutual-switching controller. Specifically, the first controller 200 internally includes a power circuit, a processor, a random access memory (RAM), a controller area network (CAN) interface circuit, and a network interface.

The above processor is a data processing and control core of an entire navigation controller and is responsible for coordinating peripheral circuits and receiving data transmitted in the form of a network from an electronic device. By reading data of peripherals, includin a Global Navigation Satellite System (GNSS) positioning module, an Inertial Measurement Unit (IMU) module, and a LiDAR, Simultaneous Localization And Mapping (SLAM) is achieved.

The RAM circuit is configured to store intermediate data in the processor or temporarily store communication data through a bus to compensate for the insufficiency of the storage capacity of an internal memory of the processor.

The CAN interface circuit includes a plurality of interface circuits with photoelectric isolation to achieve communication with other compatible devices. The serial port expansion includes a plurality of serial port expansion circuits, each of which is a photoelectric isolation circuit.

The first controller 200 mentioned above can achieve arbitrary data exchange between a network interface and a CAN interface, and also has data storage and processing capabilities to classify and organize acquired data for easy querying and calling.

Further, the network interface is either a wireless network interface or a wired network interface, so that the first controller 200 may be connect to an external electronic device 100 in a wireless or wired manner.

Preferably, the wireless manner can be WIFI transmission, and the wired manner can transmit relevant data within a network through a network cable.

Preferably, the electronic device can be selected from any one of a personal computer (PC), a tablet, or a mobile phone in the control method for the mower with the LiDAR, and the device in this embodiment, which can automatically upload the data to a cloud through a built-in application program in a system. Then, the first controller 200 downloads the data from the cloud through wired or wireless network transmission and stores it in the RAM.

Continuing to refer to FIG. 2, the second controller 300 is preferably an electronic controller. The input end of the second controller 300 is connected to the first controller 200 in the wired or wireless manner, and an output end of the second controller 300 is respectively connected to a first adjustment unit 400 and a second adjustment unit 500. The inside of the electronic controller is composed of an input information processing part, a microprocessor system, and an output information processing part. The input information processing part is configured to: shape and amplify a signal acquired by a sensor and convert the signal into a digital signal with a suitable range that can be accepted by a computer. The microprocessor system performs analysis and operation according to input information and internal memory control strategies, data, icons, and the like. to generate control commands. The output information processing part generates and amplifies various control commands output by the microprocessor system into control signals that can drive the various adjustment units and output the control signals.

Further, continuing to refer to FIG. 2, the wired manner may use a universal serial bus (USB), which can achieve high-speed data transmission between the first controller 200 and the second controller 300 at an extremely high transmission speed.

Further, the wireless manner can be transmitted using Bluetooth or Wifi. Bluetooth is a close-range wireless connection, and Wifi is suitable for remote transmission.

Further, the first adjustment unit 400 is configured to control the adjustment of a height of a cutterhead of the mower, and the second adjustment unit 500 is configured to control rise and fall of the LiDAR of the mower.

Further, the second adjustment unit 500 includes a first transmission mechanism, a second transmission mechanism, a cover plate, and a LiDAR. A movable end of the first transmission mechanism is connected to the cover plate, and a movable end of the second transmission mechanism is connected to the LiDAR.

Further, the above cover plate can be driven by the first transmission mechanism to move in a horizontal direction and rise and fall in a vertical direction. Therefore, rising and falling heights of the cover plate and first and second position information of the movement of the cover plate are also stored in the RAM of the first controller 200.

Further, the second controller 300 also has a third input end connected to a control end of a walking unit. By outputting an instruction from the second controller 300, an action of the walking unit can be achieved, so that the mower can move.

Specifically, the walking unit includes driven wheels arranged at a front end of a mower shell and driving wheels arranged at a rear end of the mower. Each driving wheel is connected to a driving motor, and a speed of rotation of the driving wheel is controlled by the driving motor.

Further, the second controller 300 also has an output end connected to a detection unit 600. The detection unit 600 is configured to: detect a real-time current of the second adjustment unit 500 and determine, through the processor, whether the mower is in a first action state or a second action state. The first action state refers to rising and falling actions of the LiDAR, and the second action state refers to a displacement action of the cover plate in the horizontal direction.

The control method for the mower with the LiDAR will be described in detail below:

S 1: A desired mowing height is set. Specifically, a mobile phone is taken as an example, a mowing height needing to be set is edited on an application program of the mobile phone. The application program uploads data of the mowing height to a cloud through network communication by the mobile phone, or directly sends the data to the first controller 200 through a local area network.

S2: The first controller 200 obtains the mowing height from the cloud or the local area network, downloads the mowing height to the RAM inside the first controller 200, and then transmits the mowing height to the second controller 300.

S3: The second controller 300 controls the first adjustment unit 400 according to the mowing height to enable the cutterhead to change from a first height to a second height.

Specifically, the cutterhead changes from the first height to the second height, which includes the following steps:

S300: The set mowing height h is obtained.

S301: The number $C_i$ of rotations of a driving end in the first adjustment unit 400 is calculated according to the mowing height. Specifically, the number $C_i$ of rotations of the driving end is calculated using the following formula:

$$C_i = k_i \times h$$

where $C_i$ is the number of rotations of the driving end in the first adjustment unit 400; $k_i$ is a constant; and h is the set mowing height.

S302: Time $t_i$ of rotation of the driving end is calculated. Specifically, a calculation formula for the time $t_i$ of rotation of the driving end is as follows:

$$t_i = (C_i \times R)/S \times 60s$$

where the number of rotations of the driving end in the first adjustment unit 400 is $C_i$; R is a reduction ratio of the driving end; and S represents a speed of rotation of the driving end.

Further, after the time of rotation of the driving end of the first adjustment unit 400 is calculated, the driving end of the first adjustment unit 400 first rotates clockwise, so that the cutterhead rises to the first height, that is, from an initial position to the highest position. When it is detected that the cutterhead reaches the highest position, the driving end of the first adjustment unit 400 stops rotating. Then, the driving end of the first adjustment unit 400 is controlled to rotate anticlockwise. The time of anticlockwise rotation is time $t_i$ described above. After the driving end rotates anticlockwise for specified time, the driving end of the first adjustment unit 400 stops rotating. At this time, the cutterhead falls to the second height to reach a specified height.

S4: The second controller 300 controls the second adjustment unit 500 for the first time to enable the LiDAR to change from a first position to a second position. Specifically, a specific control process of the LiDAR from the first position to the second position is as follows:

S400: The position of the LiDAR is determined, that is, whether the LiDAR is in a rising state is determined. If yes, step S401 is executed, and if no, whether the LiDAR is in a rising state is determined again. Specifically, whether the LiDAR is in a rising state is determined, which includes: The LiDAR is detected by a Hall sensor to obtain a detected value. The Hall sensor is connected to the first controller 200. The detected value is then compared with a set value. If the detected value is less than a set value, it is determined that the LiDAR is in a falling state; otherwise, it is determined that the LiDAR is in the rising state.

S401: The cover plate falls.

S402: The cover plate moves away from the LiDAR through a first transmission mechanism.

S403: The LiDAR rises from the first position to the second position through a second transmission mechanism, that is, the second position is the rising height described above. When at the second position, the LiDAR is exposed to the outside of the mower shell.

S404: Whether the LiDAR rises to the second position is detected. If yes, the second transmission mechanism stops running. If no, the second transmission mechanism continues to run and will stop until the LiDAR rises to the second position.

S5: The first controller 200 plans a first path and a second path.

Specifically, the first path is an operation path of the mower, and the second path is a return-to-charge path of the mower. Based on a path planning algorithm, the first path and the second path are planned separately.

S6: The mower works according to the first path.

The walking unit is controlled through the second controller 300 and performs a mowing operation along the first path.

Further, a working principle of the LiDAR is as follows: A transmitting system of the LiDAR sends a signal to a target under test (such as an obstacle), causing scattering. After being reflected by the target, the signal is acquired by a receiving system inside the LiDAR. A distance to the target is determined by measuring run time of the reflected light, thus achieving real-time obstacle avoidance. The target under test is added into the first path through an obstacle detection algorithm, and the first path is replanned to avoid the obstacle.

S7: The mower returns to a charging position according to the planned second path, that is, returns to a charging pile for charging.

S8: The second controller controls the second adjustment unit 500 for the second time to enable the LiDAR to change from the second position to the first position.

Specifically, a specific process of enabling the LiDAR to change from the second position to the first position is as follows:

S700: A position of the LiDAR is determined, that is, whether the LiDAR is in a falling state is determined. If yes, step S701 is executed. If no, whether the LiDAR is in a falling state is determined again. The above determining method is consistent with that in step S400.

S701: The LiDAR falls from the second position to the first position through the second transmission mechanism. When falling to the first position, the LiDAR is hidden inside the mower shell.

S702: The cover plate moves close to the LiDAR through the first transmission mechanism.

S703: The cover plate rises.

Further, when the LiDAR changes from the first position to the second position or from the second position to the first position, anti-pinch detection is also triggered. The anti-pinch detection is to prevent a child from putting a hand or another limb part into the mower shell during the rising and falling of the LiDAR and to avoid the problem that: when the LiDAR is located inside the mower shell, the cover plate slides in a direction close to the LiDAR to pinch the hand or another limb part of the child.

The specific anti-pinch detection includes the following steps:

B1: A real-time current is acquired. Specifically, current change values of the first adjustment unit 400 and the second adjustment unit 500 are acquired in real time through the detection unit 600.

B2: The real-time current is compared with a set current change range to determine whether the mower is in a first action state or a second action state.

The set current change range includes a first current change range and a second current change range. The first current change range represents a current change range required when the cover plate slides in the horizontal direction, represented by (Ismin, Ismax), and the second current change range represents a current change range required by the LiDAR to rise and fall in the vertical direction, represented by (Imin, Imax), where Ismin>Imin, Ismax>Imax.

Specifically, when the acquired real-time current falls within the first current change range, it is determined that the mower is in the first action state. The first action state is an action state indicating that the LiDAR is at the lowest position inside the mower shell and the cover plate moves in the horizontal direction. When the acquired real-time current falls within the second current change range, it is determined that the mower is in the second action state. The second action state is an action state indicating that the cover plate stays away from the LiDAR and the LiDAR rises from the lowest position inside the mower shell to the highest position, namely, extends out of the mower shell.

B3: The first action state is taken as an example. The real-time current is compared with a threshold. If the real-time current is less than the threshold, it indicates that there is no obstacle. If the real-time current is greater than the threshold, it indicates that there is an obstacle, that is, there is a possibility of pinching the hand. At this time, the second controller 300 can send an instruction to the second adjustment unit 500, and the second adjustment unit 500 controls the first transmission mechanism and enables the cover plate to stop moving. On the contrary, if the mower is in the second action state, the second adjustment unit 500 also controls the second transmission mechanism to enable the LiDAR to stop the action or to return to the lowest position. Similarly, if the mower is in the second action state, the real-time current is compared with the threshold; and if the current is less than the threshold, it indicates that there is no obstacle; and if the real-time current is greater than the threshold, it indicates that there is an obstacle.

Specifically, a calculation formula for the threshold is as follows:

$$TH_i = k \times th_i$$

where $TH_i$ represents the threshold; $th_i$ represents an intermediate variable of the threshold; and k represents a constant.

Since the real-time currents acquired at different periods of time have different current values, the threshold also needs to change according to the different real-time currents.

The first action state is taken as an example. In order to ensure the accuracy of threshold calculation, the real-time current can also be calculated according to the number of times of current acquisition to obtain an average real-time current within the acquisition time. That is, in the process that the cover plate moves in the horizontal direction, current data detected is [110 mA 102 mA 110 mA 104 mA 112 mA 104 mA 113 mA 104 mA 112 mA 105 mA...].

For example, the current detected for the sixth time is 104 mA. In order to ensure the accuracy of threshold calculation, the real-time currents can be averaged using the formula $th_i = (I1+I2+I3+I4+I5)/5 = (110+102+110+104+112)5 = 107.6$ mA, where $th_i$ represents an intermediate variable of the threshold.

Then, $th_i$ is substituted into the calculation formula for the threshold:

In this formula, i represents $i^{th}$ detection. For the sixth detection, i=6, $TH_6 = k \times th_6 = 1.5 \times 107.6 = 161.4$ mA, where k is a constant and i represents the number of detections. The real-time current of 107.6 mA is compared with the threshold of 161.4 mA, it is determined that the real-time current is less than the threshold, which means that 107.6 mA is less than 161.4 mA. Therefore, it is determined that there is no obstacle, namely, no pinch problem is detected. At this point, the cover plate continues to move.

Similarly, after the sixth detection, seventh detection is carried out, i>6. In this case, a calculation formula for the intermediate variable of the threshold is $th_i = a \times th_{(i-1)} + (1-a) \times I_{(i-1)}$, where $th_i$ represents the intermediate variable of the threshold, and a represents a filtering coefficient. In this embodiment, a value range of a is $0 \leq a \leq 1$, where i represents $i^{th}$ detection and I represents a current value of the $i^{th}$ detection.

Specifically, the above $th_7 = 0.05 \times I_{(7-1)} + (1-0.05) \times th_6$, which means $th_7 = 0.05 \times 113 + 0.95 \times 107.6 = 5.65 + 102.22 = 107.87$ mA, and $Th_7 = 1.5 \times 107.87 = 161.805$ mA. Therefore, it is determined that there is no obstacle, namely, no pinch problem is detected. The cover plate continues to move.

The various technical features in the foregoing embodiments may be randomly combined. For concise description, not all possible combinations of the various technical features in the above embodiments are described. However, provided that combinations of these technical features do not conflict with each other, the combinations of the various technical features are considered as falling within the scope of this specification.

The foregoing embodiments merely express several implementations of the present disclosure. The descriptions thereof are relatively specific and detailed, but are not understood as limitations on the scope of the present disclosure. It should be pointed out that a person of ordinary skill in the art can also make several transformations and improvements without departing from the idea of the present disclosure. These transformations and improvements fall within the protection scope of the present disclosure. Therefore, the protection scope of the patent of the present disclosure shall be subject to the appended claims.

**Claims**

1. A control method for a mower with a LiDAR, comprising the following steps:

   controlling the LiDAR to change from a first position to a second position;
   planning a first path and a second path;
   performing a mowing operation according to the first path; and
   returning to a charging position according to the second path; and
   controlling the LiDAR to change from the second position to the first position.

2. The control method for the mower with the LiDAR according to claim 1, wherein the mower control method further comprises the following steps:

   sending a set mowing height; and
   controlling a cutterhead to change from a first height to a second height;
   the step of controlling a cutterhead from a first height to a second height comprises the following steps:

      obtaining the set mowing height;
      calculating the number of rotations of a driving end of a first adjustment unit; and
      calculating time of rotation of the driving end of the first adjustment unit.

3. The control method for the mower with the LiDAR according to claim 2, wherein a calculation formula for the number of rotations of the driving end of the first adjustment unit is as follows:

$$C_i = k_i \times h$$

   wherein $C_i$ is the number of rotations of the driving end in the first adjustment unit; $k_i$ is a constant; and h is the set mowing height.

4. The control method for the mower with the LiDAR according to claim 2, wherein

   a calculation formula for the time of rotation of the driving end is as follows:

$$t_i = (C_i \times R)/S \times 60s$$

   wherein the number of rotations of the driving end in the first adjustment unit is Ci; R is a reduction ratio of the driving end; and S represents a speed of rotation of the driving end.

5. The control method for the mower with the LiDAR according to claim 1, wherein
   the controlling the LiDAR to change from a first position to a second position comprises the following steps:

   determining a position of the LiDAR;
   enabling a cover plate to move towards a direction away from the LiDAR; and
   raising the LiDAR from the first position to the second position.

6. The control method for the mower with the LiDAR according to claim 5, wherein after the LiDAR is raised from the first position to the second position, whether the LiDAR is raised to the second position needs to be detected; if yes, the raising is stopped; and if no, continuing to raise the LiDAR until the LiDAR reaches the second position.

7. The control method for the mower with the LiDAR according to claim 1, wherein
the controlling the LiDAR to change from the second position to the first position comprises the following steps:

> determining a position of the LiDAR;
> lowering the LiDAR from the second position to the first position; and
> enabling a cover plate to move towards a direction close to the LiDAR, and stopping the cover plate until the cover plate covers the LiDAR.

8. The control method for the mower with the LiDAR according to claim 7, wherein after the LiDAR is lowered from the second position to the first position, whether the LiDAR is lowered to the first position needs to be detected; if yes, the lowering is stopped; and if no, the LiDAR is continued to be lowered until the LiDAR reaches the first position.

9. The control method for the mower with the LiDAR according to claim 5, wherein when the LiDAR changes from the first position to the second position or from the second position to the first position, anti-pinch detection is also triggered; and the anti-pinch detection comprises the following steps:

> acquiring a real-time current;
> comparing the real-time current with a set current change range to determine whether a mower is in a first action state or a second action state;
> comparing the real-time current with a threshold; if the real-time current is less than the threshold, indicating that there is no obstacle; and if the real-time current is greater than the threshold, indicating that there is an obstacle;
> a calculation formula for the threshold is as follows:

$$TH_i = k \times th_i$$

> wherein $TH_i$ represents the threshold; $th_i$ represents an intermediate variable of the threshold; and k represents a constant.

10. A control device using the control method for the mower according to any one of claims 1 to 9, wherein the control device comprises a first controller and a second controller connected to the first controller; and an output end of the second controller is connected to a first adjustment unit and a second adjustment unit.

| Send a set mowing height | S1 |

| Transmit the set height to a second controller | S2 |

| The second controller controls a first adjustment unit | S3 |

| The second controller controls a second adjustment unit for the first time | S4 |

| Plan a first path and a second path | S5 |

| Work according to the first path | S6 |

| Return for charging according to the second path | S7 |

| The second controller controls the second adjustment mechanism for the second time | S8 |

**FIG. 1**

FIG. 2

## INTERNATIONAL SEARCH REPORT

| International application No. |
| --- |
| **PCT/CN2023/099372** |

**A.   CLASSIFICATION OF SUBJECT MATTER**

A01D34/00(2006.01)i

According to International Patent Classification (IPC) or to both national classification and IPC

**B.   FIELDS SEARCHED**

Minimum documentation searched (classification system followed by classification symbols)

IPC:A01D

Documentation searched other than minimum documentation to the extent that such documents are included in the fields searched

Electronic data base consulted during the international search (name of data base and, where practicable, search terms used)

CNABS, CNTXT, ENTXTC, DWPI, CNKI: 割草机, 激光雷达, 位置, 隐藏, 暴露, 充电, 控制 mower, laser w radar, position, hide, expos+, charg+, control

**C.   DOCUMENTS CONSIDERED TO BE RELEVANT**

| Category* | Citation of document, with indication, where appropriate, of the relevant passages | Relevant to claim No. |
| --- | --- | --- |
| PX | CN 115500143 A (WUXI JUNCHUANGFEI SATELLITE TECHNOLOGY CO., LTD.) 23 December 2022 (2022-12-23)<br>claims 1-10 | 1-10 |
| X | CN 114600621 A (NANJING QUANFENG TECHNOLOGY CO., LTD.) 10 June 2022 (2022-06-10)<br>description, paragraphs [0026]-[0059], and figures 1-17 | 1-10 |
| X | CN 114616972 A (NANJING QUANFENG TECHNOLOGY CO., LTD.) 14 June 2022 (2022-06-14)<br>description, paragraphs [0026]-[0059], and figures 1-17 | 1-10 |
| X | WO 2022120713 A1 (NANJING CHERVON INDUSTRY CO., LTD.) 16 June 2022 (2022-06-16)<br>description, embodiments, and figures 1-17 | 1-10 |
| A | CN 114488339 A (NANJING SUMEIDA INTELLIGENT TECHNOLOGY CORP., LTD.) 13 May 2022 (2022-05-13)<br>entire document | 1-10 |

☑ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 July 2023** | **11 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/099372** |

**C. DOCUMENTS CONSIDERED TO BE RELEVANT**

| Category* | Citation of document, with indication, where appropriate, of the relevant passages | Relevant to claim No. |
|---|---|---|
| A | US 2021176915 A1 (TECHTRONIC CORDLESS GP) 17 June 2021 (2021-06-17) entire document | 1-10 |
| A | CN 106647765 A (SHENZHEN TOPBAND CO., LTD.) 10 May 2017 (2017-05-10) entire document | 1-10 |

Form PCT/ISA/210 (second sheet) (July 2022)

**INTERNATIONAL SEARCH REPORT**
**Information on patent family members**

International application No.

**PCT/CN2023/099372**

| Patent document cited in search report | | | Publication date (day/month/year) | Patent family member(s) | | | Publication date (day/month/year) |
|---|---|---|---|---|---|---|---|
| CN | 115500143 | A | 23 December 2022 | None | | | |
| CN | 114600621 | A | 10 June 2022 | None | | | |
| CN | 114616972 | A | 14 June 2022 | None | | | |
| WO | 2022120713 | A1 | 16 June 2022 | CA | 3200096 | A1 | 16 June 2022 |
| CN | 114488339 | A | 13 May 2022 | None | | | |
| US | 2021176915 | A1 | 17 June 2021 | WO | 2020041985 | A1 | 05 March 2020 |
| | | | | MX | 2021001907 | A | 28 April 2021 |
| | | | | EP | 3844585 | A1 | 07 July 2021 |
| | | | | EP | 3844585 | A4 | 23 March 2022 |
| | | | | CA | 3110587 | A1 | 05 March 2020 |
| | | | | AU | 2018438158 | A1 | 11 March 2021 |
| CN | 106647765 | A | 10 May 2017 | None | | | |

Form PCT/ISA/210 (patent family annex) (July 2022)